# FASCICULE DE BREVET EUROPEEN

(11) **EP 3 604 077 B1**
(45) Date de publication et mention de la délivrance du brevet: **29.09.2021**
(21) Numéro de dépôt: 19189667.9
(22) Date de dépôt: 01.08.2019
(51) Int. Cl.: B61L 15/00, B60T 7/22, B60T 8/17, B60T 13/66, B60T 17/22, B61L 3/00

(54) **VÉHICULE FERROVIAIRE COMPORTANT UN SYSTÈME DE SÉCURITÉ PROPRE À RÉAGIR EN CAS DE COLLISION**
SCHIENENFAHRZEUG, DAS EIN SICHERHEITSSYSTEM UMFASST, DAS IM FALLE EINER KOLLISION REAGIERT
RAILWAY VEHICLE COMPRISING A SAFETY SYSTEM SUITABLE FOR REACTING IN THE EVENT OF A COLLISION

(30) Priorité: 03.08.2018 FR 1857296
(43) Date de publication de la demande: 05.02.2020
(73) Titulaire: ALSTOM Transport Technologies, 93400 Saint-Ouen (FR)
(72) Inventeur: ALBON, Adrien, 17000 La Rochelle (FR); BEN-BELGACEM, Fouad, 17000 La Rochelle (FR); LE-CORRE, Dominique, 67350 Pfaffenhoffen (FR); GAUD, François-Xavier, 17000 La Rochelle (FR)
(74) Mandataire: Lavoix

(56) Documents cités:
- WO-A1-2008/122547
- WO-A1-2017/008122
- DE-A1-102013 210 081
- DE-A1-102014 108 685
- US-A1- 2016 039 439

## Description

La présente invention concerne un véhicule ferroviaire comportant un système de sécurité propre à réagir en cas de collision avec un autre véhicule.

Les documents DE 10 2014 108685 A1 et DE 10 2013 210081 A1 décrivent des exemples de systèmes de sécurité.

Certains véhicules ferroviaires, notamment les tramways, sont amenés à côtoyer d'autres véhicules. Il existe donc un risque de collision entre un tel véhicule ferroviaire et un véhicule, notamment un véhicule automobile léger ou un poids lourd. En cas d'une telle collision, le véhicule ferroviaire peut subir un déraillement. En outre, si le conducteur ne freine pas, notamment s'il est en état de choc, le véhicule ferroviaire peut continuer sa course jusqu'à la rencontre d'un obstacle.

La présente invention a notamment pour but d'empêcher un déraillement de grande ampleur en cas d'une telle collision entre un véhicule ferroviaire et un autre véhicule.

A cet effet, l'invention a notamment pour objet un véhicule ferroviaire selon la revendication 1.

Le véhicule ferroviaire selon l'invention est apte à détecter une collision grâce à l'accéléromètre. En effet, la condition prédéfinie correspond à un pic d'accélération qui ne survient jamais lors d'un service normal. Ainsi, lorsque l'accélération mesurée remplit la condition prédéfinie, c'est que l'on est en présence d'une collision. Les moyens de freinage d'urgence sont alors actionnés, ce qui permet de limiter les risques de déraillement ou, lorsqu'un déraillement a lieu, de freiner sur les bogies encore dans les rails et ainsi réduire la distance parcourue par le véhicule ferroviaire hors des rails.

Un véhicule ferroviaire selon l'invention peut comporter en outre l'une ou plusieurs des caractéristiques suivantes, prises seules ou selon toutes combinaisons techniquement envisageables.
- Le premier seuil prédéterminé est choisi entre 6m/s² et 15m/s², et le second seuil prédéterminé est choisi entre 15m/s² et 25m/s².
- Le véhicule ferroviaire comporte deux cabines d'extrémités, chaque cabine d'extrémité logeant un accéléromètre bidirectionnel respectif.
- Lors de son utilisation, l'une des cabines d'extrémité est une cabine avant accueillant un conducteur, et l'autre des cabines d'extrémités est une cabine arrière, les moyens de commande étant configurés pour ne prendre en compte que l'accéléromètre bidirectionnel de la cabine avant.
- Le véhicule ferroviaire comporte des moyens d'enregistrement d'événements, propres à enregistrer des informations lorsque la condition prédéfinie est remplie.
- Les informations comportent au moins l'une des informations suivantes : localisation du véhicule, vitesse du véhicule, valeur de la première accélération mesurée et/ou de la seconde accélération mesurée, et/ou application d'un freinage préalable au moment où la condition prédéfinie est remplie.

L'invention concerne également un procédé de freinage d'urgence dans un véhicule ferroviaire tel que défini précédemment, selon la revendication 7.

L'invention sera mieux comprise à la lecture de la description qui va suivre, donnée uniquement à titre d'exemple et faite en se référant aux figures annexées parmi lesquelles :
- la figure 1 représente schématiquement un véhicule ferroviaire selon un exemple de mode de réalisation de l'invention, au cours d'une collision avec un véhicule automobile ;
- la figure 2 est un graphique représentant la zone d'activation d'un freinage d'urgence du véhicule de la figure 1 en termes de seuil.

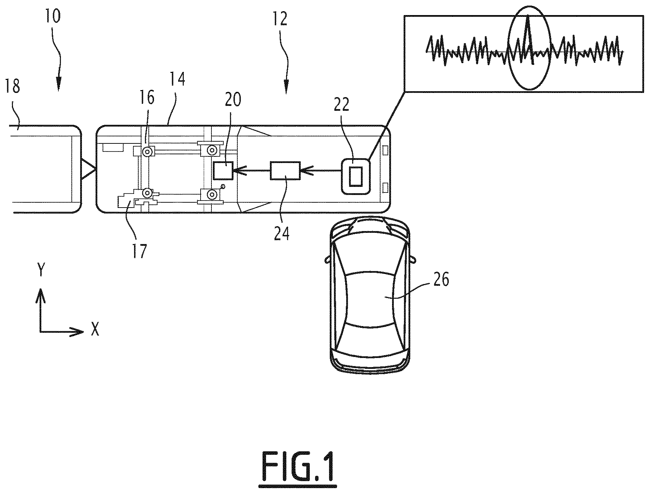

On a représenté partiellement sur la figure 1 un véhicule ferroviaire 10 selon un exemple de mode de réalisation de l'invention.

Le véhicule ferroviaire 10 est par exemple un tramway, destiné à circuler en ville, à proximité d'autres véhicules, notamment des véhicules automobiles, légers ou poids lourds.

Le véhicule ferroviaire 10 comporte deux cabines d'extrémité 12, chacune agencée à une extrémité du véhicule ferroviaire 10. Les deux cabines d'extrémité 12 sont identiques, si bien qu'une seule sera décrite.

En fonction du sens de déplacement du véhicule ferroviaire 10, l'une des cabines d'extrémité 12 est appelée cabine avant, et l'autre cabine arrière. Sur la figure 1, seule la cabine avant 12 est représentée. La cabine avant 12 est celle accueillant un conducteur du véhicule ferroviaire.

Le véhicule ferroviaire 10 comporte deux caisses d'extrémité 14, comportant chacune l'une respective des cabines d'extrémité 12. Les deux caisses d'extrémité 14 sont identiques, si bien qu'une seule sera décrite. En fonction du sens de déplacement du véhicule ferroviaire 10, l'une des caisses d'extrémité 14 est appelée caisse avant, et l'autre caisse arrière. Sur la figure 1, seule la caisse avant 14 est représentée.

Dans l'exemple décrit, chaque caisse d'extrémité 14 comporte au moins un bogie 16, équipé d'un dispositif de freinage 17.

Le véhicule ferroviaire 10 comporte généralement au moins une caisse intermédiaire 18, comprenant de manière optionnelle au moins un bogie de préférence équipé d'un dispositif de freinage.

Le véhicule ferroviaire 10 comporte des moyens de freinage d'urgence 20, reliés au dispositif de freinage de chaque bogie, et propres à engager un freinage d'urgence lorsque certaines conditions prédéfinies sont remplies.

Le véhicule ferroviaire 10 selon l'invention comporte au moins un accéléromètre bidirectionnel 22, mesurant une première accélération dans une direction longitudinale X et une seconde accélération dans une direction transversale Y perpendiculaire à la direction longitudinale.

L'accéléromètre 22 est logé dans la cabine avant 12. Avantageusement, un autre accéléromètre est logé de la même manière dans la cabine arrière.

L'accéléromètre 22 est par exemple logé dans une armoire électrique de la cabine avant 12. En variante, l'accéléromètre 22 est logé sur une traverse de châssis de la cabine avant 12 ou de la caisse d'extrémité avant.

Le véhicule ferroviaire 10 comporte des moyens 24 de commande des moyens de freinage d'urgence 20, reliés d'une part à l'accéléromètre 22 et d'autre part aux moyens de freinage d'urgence 20. Ces moyens de commande 24 sont configurés pour commander un freinage d'urgence lorsque la première accélération mesurée dépasse un premier seuil prédéterminé F1 et/ou que la seconde accélération mesurée dépasse un second seuil prédéterminé F2.

Les moyens de commandes sont configurés pour commander un freinage d'urgence lorsque, dans un système de coordonnées cartésiennes en deux dimensions associé à l'accéléromètre, représentant sur un premier axe, choisi parmi un axe des abscisse et un axe des ordonnées, une accélération longitudinale et sur un deuxième axe, choisi parmi un axe des abscisse et un axe des ordonnées et différent du premier axe, une accélération transversale, et ayant pour centre un point correspondant à des accélérations longitudinale et transversale nulles, alors un point ayant pour coordonnées suivant le premier axe la première accélération mesurée et pour coordonnées suivant le deuxième axe la seconde accélération mesurée est en dehors d'une surface pleine prédéfinie comprenant un point ayant pour coordonnées suivant le premier axe le premier seuil (F1) et un autre point ayant pour coordonnées suivant le deuxième axe le deuxième seuil (F2).

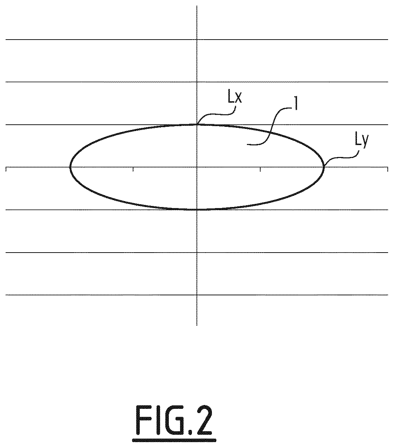

La surface pleine est une surface elliptique définie par une ellipse 1 (représentée sur la figure 2), centrée sur le centre du repère de coordonnées cartésiennes et de demi-grand axe F1 et de demi-petit axe F2. Plus précisément, l'ellipse est centrée sur le centre du repère de coordonnées cartésiennes et les points, de coordonnées suivant le premier axe Lx et de coordonnées suivant le deuxième axe Ly, formant l'ellipse vérifient l'équation suivante : Lx²/F1² + Ly²/F2²=1.

La surface pleine prédéfinie correspond à un seuil de déclenchement du freinage d'urgence.

La figure 1 comporte un graphique montrant une évolution de la seconde accélération au cours du temps. Un même graphique peut être tracé pour la première accélération, de manière identique.

La première ou seconde accélération reste en dessous du premier ou second seuil prédéfini en service normal. Toutefois, en cas de collision avec un autre véhicule 26, la première et/ou seconde accélération varient brusquement et fortement. Le point formé par la première accélération et par la seconde accélération se retrouve ainsi en dehors de l'ellipse 1 de la figure 2.

On notera que, lorsque la collision est transversale, comme cela est représenté sur la figure, c'est la seconde accélération, selon la direction transversale Y, qui dépasse le second seuil prédéfini. En revanche, lorsque la collision est frontale, c'est la première accélération, selon la direction longitudinale X, qui dépasse le premier seuil prédéfini.

Toutefois le fait d'utiliser la surface pleine elliptique comme seuil de déclenchement du freinage d'urgence permet de détecter en plus des chocs frontaux et des chocs transversaux, les chocs de travers (à la fois frontaux et transversaux) de manière précise.

Le premier seuil prédéfini est par exemple compris entre 6 m/s² et 15 m/s² et le second seuil prédéfini est par exemple compris entre 15m/s² et 25m/s².

Ainsi, lorsque le point formé par l'accélération longitudinale et par l'accélération transversale est en dehors de l'ellipse 1 de la figure 2, les moyens de commande 24 en déduisent que le véhicule ferroviaire 10 se trouve en situation de collision, et commandent donc immédiatement un freinage d'urgence.

De manière optionnelle, les moyens de commande 24 sont configurés pour ne prendre en compte que l'accéléromètre bidirectionnel 22 de la cabine avant 12. L'accéléromètre de la cabine arrière est alors désactivé, ou ses relevés ne sont pas pris en compte par les moyens de commande 24. En effet, si un choc intervient sur la cabine arrière 22 et provoque un déraillement du dernier bogie de la caisse arrière 14, le véhicule ferroviaire 10, de par sa vitesse et du fait que les bogies précédents sont toujours sur les rails, devraient remettre la caisse arrière 14 dans l'alignement des rails et ré-enrailler le dernier bogie.

De manière optionnelle, les moyens de commande 24 sont configurés pour n'engager un freinage d'urgence que si la vitesse du véhicule ferroviaire 10 est supérieure à une vitesse minimale prédéfinie, par exemple 3 km/h.

Avantageusement, le véhicule ferroviaire comporte des moyens d'enregistrement d'événements, propres à enregistrer des informations lorsque le point formé par la première accélération et par la seconde accélération se trouve en dehors de l'ellipse 1 de la figure 2.

Les informations comportent au moins l'une des informations suivantes :
- localisation du véhicule lors de la collision, obtenue par des moyens de localisation classiques, par exemple par GPS ;
- vitesse du véhicule lors de la collision,
- valeur de la première accélération mesurée et/ou de la seconde accélération mesurée lors de la collision, et/ou
- application d'un freinage préalable à la collision.

Ces informations sont destinées à être analysées, afin par exemple de détecter des facteurs de risques (carrefour dangereux, vitesse trop importante sur une section de voie particulière, etc.), en vue d'appliquer des correctifs pour éviter des collisions futures.

On notera que l'invention n'est pas limitée au mode de réalisation précédemment décrit, mais pourrait présenter diverses variantes sans sortir du cadre des revendications.

## Revendications

1. Véhicule ferroviaire (10), notamment tramway, comportant des moyens (20) de freinage d'urgence, comportant au moins un accéléromètre bidirectionnel (22), mesurant une première accélération dans une direction longitudinale (X) et une seconde accélération dans une direction transversale (Y), et des moyens (24) de commande des moyens de freinage d'urgence (20), configurés pour commander un freinage d'urgence lorsque la première accélération mesurée et la seconde accélération mesurée remplissent au moins une condition prédéfinie, telle que, dans un système de coordonnées cartésiennes en deux dimensions associé à l'accéléromètre, représentant sur un premier axe une accélération longitudinale et sur un deuxième axe, différent du premier axe, une accélération transversale, et ayant pour centre un point correspondant à des accélérations longitudinale et transversale nulles, alors un point ayant pour coordonnées suivant le premier axe la première accélération mesurée et pour coordonnées suivant le deuxième axe la seconde accélération mesurée est en dehors d'une surface pleine prédéfinie comprenant un premier point ayant pour coordonnées suivant le premier axe un premier seuil F1 prédéterminé et un deuxième point ayant pour coordonnées suivant le deuxième axe un deuxième seuil F2 prédéterminé,
**caractérisé en ce que** les moyens de freinage d'urgence sont configurés avec la surface pleine formée par une surface elliptique définie par une ellipse centrée sur le centre du repère de coordonnées cartésiennes et pour laquelle les points de coordonnées suivant le premier axe Lx et de coordonnées suivant le deuxième axe Ly formant l'ellipse vérifient l'équation suivante : Lx²/F1² + Ly²/F2²=1.

2. Véhicule ferroviaire (10) selon la revendication 1, dans lequel le premier seuil prédéterminé est choisi entre 6m/s² et 15m/s², et le second seuil prédéterminé est choisi entre 15m/s² et 25m/s².

3. Véhicule ferroviaire (10) selon l'une quelconque des revendications précédentes, comportant deux cabines d'extrémités (12), chaque cabine d'extrémité (12) logeant un accéléromètre bidirectionnel (22) respectif.

4. Véhicule ferroviaire (10) selon la revendication 3, dans lequel, lors de son utilisation, l'une des cabines d'extrémité (12) est une cabine avant accueillant un conducteur, et l'autre des cabines d'extrémités est une cabine arrière, les moyens de commande (24) étant configurés pour ne prendre en compte que l'accéléromètre bidirectionnel (22) de la cabine avant (12).

5. Véhicule ferroviaire (10) selon l'une quelconque des revendications précédentes, comportant des moyens d'enregistrement d'événements, propres à enregistrer des informations lorsque la condition prédéfinie est remplie.

6. Véhicule ferroviaire (10) selon la revendication 5, dans lequel les informations comportent au moins l'une des informations suivantes :
- localisation du véhicule,
- vitesse du véhicule,
- valeur de la première accélération mesurée et/ou de la seconde accélération mesurée, et/ou
- application d'un freinage préalable au moment où la condition prédéfinie est remplie.

7. Procédé de freinage d'urgence dans un véhicule ferroviaire (10) selon l'une quelconque des revendications précédentes, comportant les étapes suivantes :
- surveillance de la première accélération et de la seconde accélération,
- commande d'un freinage d'urgence lorsque la première accélération mesurée et la seconde accélération mesurée remplit au moins une condition prédéfinie telle que, dans un système de coordonnées cartésiennes en deux dimensions associé à l'accéléromètre, représentant sur un premier axe une accélération longitudinale et sur un deuxième axe, différent du premier axe, une accélération transversale, et ayant pour centre un point correspondant à des accélérations longitudinale et transversale nulles, alors un point ayant pour coordonnées suivant le premier axe la première accélération mesurée et pour coordonnées suivant le deuxième axe la seconde accélération mesurée est en dehors d'une surface pleine prédéfinie comprenant un premier point ayant pour coordonnées suivant le premier axe un premier seuil F1 prédéterminé et un deuxième point ayant pour coordonnées suivant le deuxième axe un deuxième seuil F2 prédéterminé,
**caractérisé en ce que** les moyens de freinage d'urgence sont configurés avec la surface pleine formée par une surface elliptique définie par une ellipse centrée sur le centre du repère de coordonnées cartésiennes et pour laquelle les points de coordonnées suivant le premier axe Lx et de coordonnées suivant le deuxième axe Ly formant l'ellipse vérifient l'équation suivante : Lx²/F1² + Ly²/F2²=1.

## Patentansprüche

1. Schienenfahrzeug (10), insbesondere Straßenbahn, welches aufweist Mittel (20) zum Notbremsen, welche aufweisen zumindest einen bidirektionalen Beschleunigungsmesser (22), welche eine erste Beschleunigung in einer Längsrichtung (X) und eine zweite Beschleunigung in einer Querrichtung (Y) misst, und Mittel (24) zum Steuern der Mittel zum Notbremsen (20), welche eingerichtet sind, um ein Notbremsen zu befehlen, wenn die erste gemessene Beschleunigung und die zweite gemessene Beschleunigung zumindest eine vordefinierte Bedingung erfüllen, sodass in einem mit dem Beschleunigungsmesser assoziierten System mit kartesischen Koordinaten in zwei Dimensionen, welches an einer ersten Achse eine Längsbeschleunigung und an einer zweiten Achse, welche von der ersten Achse verschieden ist, eine Querbeschleunigung darstellt und welches als Zentrum einen Punkt hat, welcher zur Längsbeschleunigung Null und zur Querbeschleunigung Null korrespondiert, dann ein Punkt, welcher als Koordinaten entlang der ersten Achse die erste gemessene Beschleunigung und als Koordinaten entlang der zweiten Achse die zweite gemessene Beschleunigung hat, außerhalb einer vordefinierten Vollfläche ist, welche aufweist einen ersten Punkt, welcher als Koordinaten entlang der ersten Achse einen ersten vorbestimmten Schwellenwert F1 hat, und einen zweiten Punkt, welcher als Koordinaten entlang der zweiten Achse einen zweiten vorbestimmten Schwellenwert F2 hat,
**dadurch gekennzeichnet, dass** die Mittel zum Notbremsen so eingerichtet sind, dass die Vollfläche durch eine elliptische Fläche gebildet ist, welche mittels einer Ellipse definiert ist, welche zum Zentrum des Koordinatensystems mit kartesischen Koordinaten zentriert ist, und wobei die Punkte mit Koordinaten entlang der ersten Achse Lx und mit Koordinaten entlang der zweiten Achse Ly die Ellipse bilden, welche die folgende Gleichung erfüllt: Lx²/F1²+Ly²/F2²=1.

2. Schienenfahrzeug (10) gemäß Anspruch 1, wobei der erste vorbestimmte Schwellenwert zwischen 6m/s² und 15m/s² ausgewählt ist und der zweite vorbestimmte Schwellenwert zwischen 15m/s² und 25m/s² ausgewählt ist.

3. Schienenfahrzeug (10) gemäß irgendeinem der vorherigen Ansprüche, welches zwei Endkabinen (12) aufweist, wobei jede Endkabine (12) einen jeweiligen bidirektionalen Beschleunigungsmesser (22) aufweist.

4. Schienenfahrzeug (10) gemäß Anspruch 3, wobei bei seiner Verwendung eine der Endkabinen (12) eine vordere Kabine ist, welche einen Fahrer unterbringt, und die andere der Endkabinen eine hintere Kabine ist, wobei die Mittel zum Steuern (24) eingerichtet sind, um nur den bidirektionalen Beschleunigungsmesser (22) der vorderen Kabine (12) zu berücksichtigen.

5. Schienenfahrzeug (10) gemäß irgendeinem der vorherigen Ansprüche, welches Mittel zum Aufzeichnen von Ereignissen aufweist, welche imstande sind, Informationen aufzuzeichnen, wenn die vordefinierte Bedingung erfüllt ist.

6. Schienenfahrzeug (10) gemäß Anspruch 5, wobei die Informationen zumindest eine der folgenden Informationen aufweisen:
- Ort des Fahrzeugs,
- Geschwindigkeit des Fahrzeugs,
- Wert der ersten gemessenen Beschleunigung und/oder der zweiten gemessenen Beschleunigung, und/oder
- Anwendung einer Vorbremsung bezüglich des Moments, in welchem die vordefinierte Bedingung erfüllt ist.

7. Verfahren zum Notbremsen in einem Schienenfahrzeug (10) gemäß irgendeinem der vorherigen Ansprüche, welches die folgenden Schritte aufweist:
- Überwachen der ersten Beschleunigung und der zweiten Beschleunigung,
- Befehlen eines Notbremsens, wenn die erste gemessene Beschleunigung und die zweite gemessene Beschleunigung zumindest eine vordefinierte Bedingung erfüllen, sodass in einem mit dem Beschleunigungsmesser assoziierten System mit kartesischen Koordinaten in zwei Dimensionen, welches an einer ersten Achse eine Längsbeschleunigung und an einer zweiten Achse, welche von der ersten Achse verschieden ist, eine Querbeschleunigung darstellt und welches als Zentrum einen Punkt hat, welcher zur Längsbeschleunigung Null und zur Querbeschleunigung Null korrespondiert, dann ein Punkt, welcher als Koordinaten entlang der ersten Achse die erste gemessene Beschleunigung und als Koordinaten entlang der zweiten Achse die zweite gemessene Beschleunigung hat, außerhalb einer vordefinierten Vollfläche ist, welche aufweist einen ersten Punkt, welcher als Koordinaten entlang der ersten Achse einen ersten vorbestimmten Schwellenwert F1 hat, und einen zweiten Punkt, welcher als Koordinaten entlang der zweiten Achse einen zweiten vorbestimmten Schwellenwert F2 hat,
**dadurch gekennzeichnet, dass** die Mittel zum Notbremsen so eingerichtet sind, dass die Vollfläche durch eine elliptische Fläche gebildet ist, welche mittels einer Ellipse definiert ist, welche zum Zentrum des Koordinatensystems mit kartesischen Koordinaten zentriert ist, und wobei die Punkte mit Koordinaten entlang der ersten Achse Lx und mit Koordinaten entlang der zweiten Achse Ly die Ellipse bilden, welche die folgende Gleichung erfüllt: Lx²/F1²+Ly²/F2²=1.

## Claims

1. A railway vehicle (10), in particular a tram, including emergency braking means (20), including at least one bidirectional accelerometer (22), measuring a first acceleration in a longitudinal direction (X) and a second acceleration in a transverse direction (Y), and means (24) for commanding the emergency braking means (20), configured to command an emergency braking when the first measured acceleration and the second measured acceleration meet at least one predefined condition, such that, in a two-dimensional Cartesian coordinate system associated with the accelerometer, representing a longitudinal acceleration on a first axis, and a transverse acceleration on a second axis different from the first axis, and having, for center, a point corresponding to nil longitudinal and transverse accelerations, then a point having the first measured acceleration for coordinates along the first axis and the second measured acceleration for coordinates along the second axis, is outside a predefined solid surface comprising a first point having a first predetermined threshold F1 for coordinates along the first axis and a second point having a second predetermined threshold F2 for coordinates along the second axis,
**characterized in that** the emergency braking means are configured with the solid surface formed by an elliptical surface defined by an ellipse centered on the center of the Cartesian coordinate system and for which the points of coordinates along the first axis Lx and coordinates along the second axis Ly forming the ellipse verify the following equation: Lx²/F1² + Ly²/F2²=1.

2. The railway vehicle (10) according to claim 1, wherein the first predetermined threshold is chosen between 6 m/s² and 15 m/s², and the second predetermined threshold is chosen between 15 m/s² and 25 m/s².

3. The railway vehicle (10) according to any one of the preceding claims, including two end cabs (12), each end cab (12) housing a respective bidirectional accelerometer (22).

4. The railway vehicle (10) according to claim 3, wherein, during its use, one of the end cabs (12) is a front cab accommodating the driver, and the other of the end cabs is a rear cab, the command means (24) being configured only to take into account the bidirectional accelerometer (22) of the front cab (12).

5. The railway vehicle (10) according to any one of the preceding claims, including event recording means, capable of recording information when the predefined condition is met.

6. The railway vehicle (10) according to claim 5, wherein the information includes at least one of the following information items:
- location of the vehicle,
- speed of the vehicle,
- value of the first measured acceleration and/or of the second measured acceleration, and/or
- application of braking prior to the moment where the predefined condition is met.

7. An emergency braking method in a railway vehicle (10) according to any one of the preceding claims, including the following steps:
- monitoring the first acceleration and the second acceleration,
- commanding emergency braking when the first measured acceleration and the second measured acceleration meet at least one predefined condition such that, in a two-dimensional Cartesian coordinate system associated with the accelerometer, representing a longitudinal acceleration on a first axis and a transverse acceleration on a second axis different from the first axis, and having a point corresponding to nil longitudinal and transverse accelerations for center, then a point having the first measured acceleration for coordinates along the first axis and the second measured acceleration for coordinates along the second axis, is outside a predefined solid surface comprising a first point having a first predetermined threshold F1 for coordinates along the first axis and a second point having a second predetermined threshold F2 for coordinates along the second axis,
**characterized in that** the emergency braking means are configured with the solid surface formed by an elliptical surface defined by an ellipse centered on the center of the Cartesian coordinate system and for which the points of coordinates along the first axis Lx and of coordinates along the second axis Ly forming the ellipse verify the following equation: Lx²/F1² + Ly²/F2²=1.
